# EUROPÄISCHE PATENTANMELDUNG

(11) **EP 4 707 751 A1**
(43) Veröffentlichungstag der Anmeldung: **11.03.2026**
(21) Anmeldenummer: 25199801.9
(22) Anmeldetag: 03.09.2025
(51) Int. Cl.: G01D 11/24, G01D 5/14

(54) **SENSOREINHEIT UND DREHGEBER**

(30) Priorität: 10.09.2024 DE 102024125904
(71) Anmelder: HELLA GmbH & Co. KGaA, 59552 Lippstadt (DE)
(72) Erfinder: Bader, Manuel, 34431 Marsberg (DE); Berhorst, Jann, 33178 Borchen (DE); KUHLMANN, Sascha, 59590 Geseke (DE); Maßmann, Clemens, 59555 Lippstadt (DE); MÜLLER, Andreas, 59555 Lippstadt (DE); Tegetmeyer, Thomas, 33106 Paderborn (DE)
(74) Vertreter: Behr-Wenning, Gregor

(57) **Zusammenfassung**

Die Erfindung betrifft eine Sensoreinheit (10) für einen Drehgeber (100), wenigstens umfassend ein Rotorelement (11), eine Statoreinheit (12), die zur Bestimmung einer Winkellage des Rotorelements (11) ausgebildet ist, und einen Trägerkörper (13). Erfindungsgemäß ist das Rotorelement (11) an einer ersten Flachseite eines Aufnahmeabschnitts (13a) des Trägerkörpers (13) drehbar gelagert, wobei die Statoreinheit (12) auf einer umseitigen zweiten Flachseite des Aufnahmeabschnitts (13a) angeordnet ist.

## Beschreibung

### Beschreibung

Die vorliegende Erfindung betrifft eine Sensoreinheit für einen Drehgeber sowie einen entsprechenden Drehgeber für ein Kraftfahrzeug, eine Baumaschine, eine Landmaschine oder eine Sondermaschine.

### STAND DER TECHNIK

Drehgeber dienen dazu, Dreh- oder Verschiebebewegungen zweier Komponenten relativ zueinander zu messen. Drehgeber finden vielfältige Verwendung in Kraftfahrzeugen, Bau- und Landmaschinen oder Sondermaschinen, beispielsweise zur Bestimmung einer Querlenkerstellung, einer Pedalstellung oder dem Kippwinkel eines Baggerlöffels. Drehgeber umfassen typischerweise eine Sensorik basierend auf einem Rotorelement und einer zugehörigen Statoreinheit, die die Winkellage des Rotorelements mittels eines induktiven oder magnetischen Messprinzips erfasst, sowie ein Gehäuse und einen daran drehbar gelagerten Rotorträger als Schnittstellen für die jeweilige Anwendung.

Beispielsweise offenbart die Druckschrift DE 10 2022 132 346 A1 einen Drehgeber mit einem vielfältig konfigurierbaren Rotorträger, etwa in Gestalt eines Rotorarms oder einer Rotorwelle. Das zu detektierende Rotorelement ist dabei jeweils am Rotorträger aufgenommen und wird montageseitig mit diesem am Gehäuse des Drehgebers angeordnet, wobei die Statoreinheit innerhalb des Gehäuses positioniert ist. Damit ist das Rotorelement hinsichtlich seiner geometrischen Abmessungen und seiner Positionierung relativ zur Statoreinheit unerwünschten Randbedingungen unterworfen, die aus der detaillierten geometrischen Ausgestaltung des Rotorträgers und dessen Aufnahme am Gehäuse resultieren.

### OFFENBARUNG DER ERFINDUNG

Es ist die Aufgabe der vorliegenden Erfindung, eine alternative Ausgestaltung eines Drehgebers vorzuschlagen, wobei insbesondere die Konfigurierbarkeit des zugehörigen Drehwinkelsensors konzeptuell verbessert werden soll.

Diese Aufgabe wird von einer Sensoreinheit gemäß Anspruch 1 sowie einem damit ausgestatteten Drehgeber gemäß Anspruch 9 gelöst. Vorteilhafte Weiterbildungen der Erfindung sind in den abhängigen Ansprüchen angegeben.

Die Erfindung setzt an einer Sensoreinheit für einen Drehgeber an, die ein Rotorelement, eine Statoreinheit zur Bestimmung einer Winkellage des Rotorelements und einen Trägerkörper umfasst, wobei erfindungsgemäß das Rotorelement an einer ersten Flachseite eines Aufnahmeabschnitts des Trägerkörpers drehbar gelagert ist, und wobei die Statoreinheit auf einer umseitigen zweiten Flachseite des Aufnahmeabschnitts angeordnet ist.

Die Erfindung geht dabei von dem Gedanken aus, eine integrierte Sensoreinheit bereitzustellen, die das Rotorelement und die Statoreinheit auf einem gemeinsamen Trägerkörper umfasst, sodass die Konfigurierbarkeit der Sensoreinheit hinsichtlich der Abmessungen des Rotorelements und der relativen Anordnung von Rotorelement und Statoreinheit im Vergleich zum eingangs beschriebenen Stand der Technik wesentlich verbessert ist. Durch Vergrößerung des Durchmessers des Rotorelements und/oder durch Verringerung des Abstands zwischen Rotorelement und Statoreinheit können Signalstärke und Genauigkeit der Drehwinkelmessung verbessert werden.

Bei der erfindungsgemäßen Sensoreinheit sind das Rotorelement und die Statoreinheit auf der Vorder- bzw. Rückseite des etwa plattenförmigen Aufnahmeabschnitts des Trägerkörpers aufgenommen, wobei vorgesehen ist, dass der Aufnahmeabschnitt in dem Gehäuse eines zugehörigen Drehgebers aufgenommen wird. Die Abmessungen des Trägerkörpers sind daher für die jeweilige Anwendung festzulegen, insbesondere derart, dass der Aufnahmeabschnitt in dem konkreten Gehäuse Platz findet. Das Rotorelement kann somit beispielsweise einen Durchmesser aufweisen, der im Wesentlichen einer Breite des Aufnahmeabschnitts des Trägerkörpers bzw. nahezu einer Breite des zugehörigen Drehgeber-Gehäuses entspricht. Der Abstand zwischen Rotorelement und Statoreinheit ist lediglich durch die mechanisch-strukturell erforderliche Mindestdicke des Aufnahmeabschnitts des Trägerkörpers begrenzt.

Zur Lagerung des Rotorelements ist dieses beispielsweise an einem Aufnahmeelement starr aufgenommen, wobei das Aufnahmeelement an der ersten Flachseite des Aufnahmeabschnitts drehbar gelagert ist. Beispielsweise ist das Aufnahmeelement scheibenförmig ausgebildet, wobei das Rotorelement beispielsweise von dem Aufnahmeelement umspritzt oder in dieses eingeclipst ist. Zudem ist das Aufnahmeelement vorteilhafterweise zum Aufbau einer drehfesten Verbindung mit einem Rotorträger eines Drehgebers ausgebildet, insbesondere zum Aufbau einer Passverzahnung mit einem zugehörigen Verbindungsabschnitt des Rotorträgers.

Betreffend das Messprinzip zur Detektion der Winkellage des Rotorelements relativ zur Statoreinheit kann die erfindungsgemäße Sensoreinheit unterschiedliche Ausführungsformen realisieren. Insbesondere ist die Statoreinheit als eine Anordnung von planaren Erreger- und Empfängerspulen auf einer Leiterkarte ausgebildet, und das Rotorelement weist eine elektrische Leitfähigkeit auf. Der dadurch verwirklichte induktive Winkelsensor ist aus der Druckschrift DE 197 38 836 A1 bekannt. Darin wird ein induktiver Winkelsensor mit einem Statorelement beschrieben, welches eine mit einer periodischen Wechselspannung beaufschlagte Erregerspule sowie mehrere Empfangsspulen aufweist, und einem Rotorelement, welches die Stärke der induktiven Kopplung zwischen Erregerspule und Empfangsspulen in Abhängigkeit seiner Winkelposition relativ zum Statorelement vorgibt, und einer Auswerteschaltung zur Bestimmung der Winkelposition des Rotorelementes relativ zum Statorelement aus den in den Empfangsspulen induzierten Spannungssignalen, wobei das Rotorelement mindestens eine Kurzschlussleitung ausbildet, welche, zumindest über Teilbereiche, in Umfangsrichtung des Rotorelementes eine sich periodisch wiederholende Schleifenstruktur ausbildet. Ein solcher induktiver Winkelsensor zeichnet sich u. a. durch einen kompakten Aufbau, ein hohes erzielbares Auflösungsvermögen und eine besonders hohe Unempfindlichkeit gegenüber Fertigungs- und Einbautoleranzen aus.

Alternativ kann die Statoreinheit als ein Hall-Sensor oder als ein magnetoresistiver Sensor ausgebildet sein, wobei das Rotorelement aus einem magnetischen Werkstoff gebildet ist. Das Messprinzip der Sensoreinheit beruht dann auf der Detektion einer Änderung des magnetischen Flusses bei einer Drehbewegung des magnetischen Rotorelements.

Vorzugsweise weist der Trägerkörper einen endseitigen Steckerabschnitt auf, insbesondere eine Steckerbuchse, wobei elektrische Kontaktmittel zur Kontaktierung der Statoreinheit in dem Steckerabschnitt angeordnet sind. Der Steckerabschnitt bildet die Versorgungs- und Datenschnittstelle zum Ansteuern und Auslesen der Sensoreinheit. Der Steckerabschnitt kann für jede konkrete Anwendung individuell konfiguriert sein.

Weiterhin kann der Trägerkörper Verbindungsmittel aufweisen, die zum Aufbau einer mechanischen Verbindung mit einem Gehäuse eines Drehgebers ausgebildet sind, insbesondere zum Aufbau einer Schnappverbindung. Beispielsweise sind die Verbindungsmittel als elastisch biegbare Arme mit Laschen ausgebildet, die zum federnden Einspreizen in korrespondierende Rastnasen am Gehäuse vorgesehen sind. Weiterhin kann ein Dichtmittel, beispielsweise ein Dichtgummi, in die mechanische Verbindung von Trägerkörper und Gehäuse integriert sein.

In vorteilhafterweise Ausführungsform ist der Trägerkörper als ein einteiliges Spritzgussbauteil ausgebildet.

Die Erfindung betrifft zudem einen Drehgeber für ein Kraftfahrzeug, eine Baumaschine, eine Landmaschine oder eine Sondermaschine, wenigstens umfassend eine Sensoreinheit gemäß einer der vorgenannten Ausführungsformen, einen Rotorträger und ein Gehäuse, wobei der Aufnahmeabschnitt des Trägerkörpers der Sensoreinheit mit dem Rotorelement und der Statoreinheit in dem Gehäuse aufgenommen und der Rotorträger an dem Gehäuse drehbar gelagert ist, wobei ein Verbindungsabschnitt des Rotorträgers in das Gehäuse hineinragt und mit dem Rotorelement wenigstens mittelbar drehfest verbunden ist, derart, dass eine Drehbewegung des Rotorträgers mittels der Statoreinheit detektierbar ist.

Insbesondere weist das Gehäuse eine Sensoröffnung auf, durch die der Aufnahmeabschnitt des Trägerkörpers montageseitig einführbar ist, wobei die Sensoröffnung im montierten Zustand durch den Steckerabschnitt verschlossen ist. Vorzugsweise ist ein Dichtmittel, beispielsweise ein Dichtgummiring, um die Sensoröffnung angeordnet.

### BEVORZUGTE AUSFÜHRUNGSBEISPIELE DER ERFINDUNG

Weitere, die Erfindung verbessernde Maßnahmen werden nachstehend gemeinsam mit der Beschreibung von bevorzugten Ausführungsbeispielen der Erfindung anhand der Figuren näher dargestellt. Es zeigt in schematischer Darstellung:
- Fig. 1a-c:: räumliche Ansichten eines Trägerkörpers für eine erfindungsgemäße Sensoreinheit,
- Fig. 2a, b:: räumliche Ansichten einer erfindungsgemäßen Sensoreinheit,
- Fig. 3a:: eine räumliche Ansicht eines erfindungsgemäßen Drehgebers,
- Fig. 3b:: eine Explosionsdarstellung zu Fig. 3a,
- Fig. 4a:: eine räumliche Ansicht eines Details eines erfindungsgemäßen Drehgebers,
- Fig. 4b:: eine Seitenansicht zu Fig. 4a, und
- Fig. 4c:: eine Schnittansicht zu Fig. 4b.

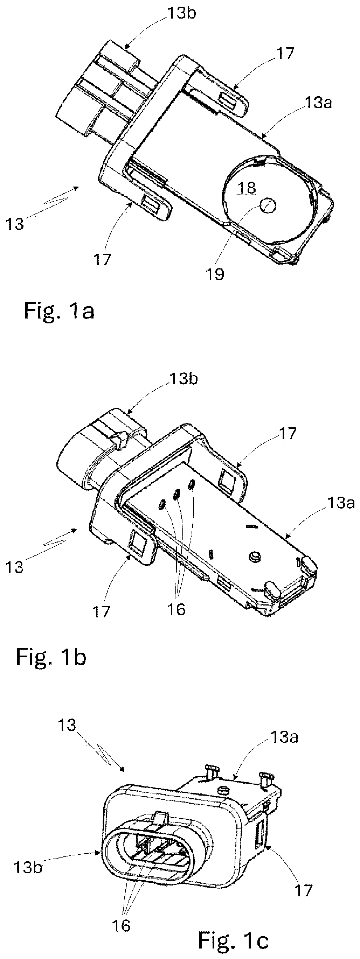

Fig. 1a-c zeigen räumliche Ansichten eines Trägerkörpers 13 für eine erfindungsgemäße Sensoreinheit. Der Trägerkörper 13 umfasst den Aufnahmeabschnitt 13a, der im Wesentlichen plattenförmig ausgebildet ist und zur Aufnahme und Lagerung eines Rotorelements sowie einer Statoreinheit auf seinen beiden Flachseiten dient. In Fig. 1a ist die erste Flachseite des Aufnahmeabschnitts 13a dargestellt, die die Vertiefung 18 zur Aufnahme und Führung eines Aufnahmeelements samt eines daran starr aufgenommenen Rotorelements aufweist. In der Mitte der Vertiefung ist 18 der Lagerpunkt 19 in Form einer halbkugelförmigen Auswölbung angeformt, der zur drehbaren Lagerung des Aufnahmeelements vorgesehen ist. Fig. 1b zeigt die zweite Flachseite des Aufnahmeabschnitts 13a, auf der eine Statoreinheit anordenbar ist. Aus der zweiten Flachseite ragen die metallischen Kontaktmittel 16 in Form von Löffelkontakten heraus, die zur Kontaktierung der Statoreinheit, insbesondere einer zugehörigen Leiterkarte, vorgesehen sind.

Weiterhin umfasst der Trägerkörper 13 den endseitigen Steckerabschnitt 13b in Form einer Steckerbuchse, über den die Statoreinheit mittels der Kontaktmittel 16 zwecks Versorgung und Datenaustausch kontaktierbar ist. Zudem weist der Trägerkörper 13 die Verbindungsmittel 17 in Form von zwei elastisch biegbaren Armen mit Laschen auf, die zum Aufbau einer Schnappverbindung mit dem Gehäuse eines Drehgebers vorgesehen sind. Der dargestellte Trägerkörper 13 ist als ein einteiliges Kunststoffbauteil im Spritzguss gefertigt, wobei die metallischen Kontaktmittel 16 beispielsweise durch Umspritzen integriert worden sind.

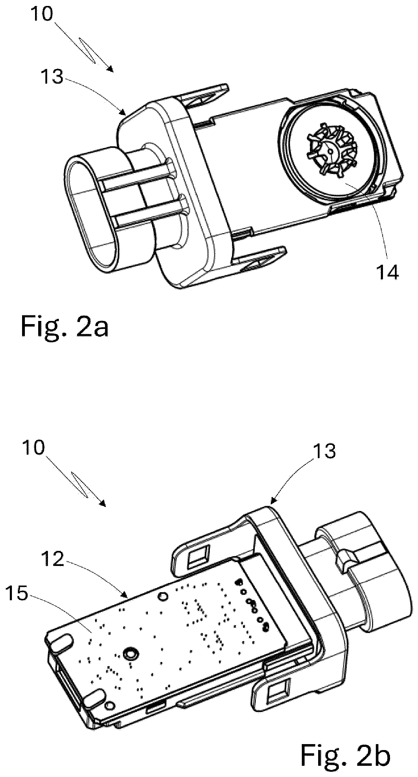

Fig. 2a, b zeigen räumliche Ansichten einer erfindungsgemäßen Sensoreinheit 10 mit einem Trägerkörper 13 gemäß der Fig. 1a-c. In die Vertiefung 18 auf der ersten Flachseite des Aufnahmeabschnitts 13a ist das Aufnahmeelement 14 eingesetzt. Dieses weist einen etwa scheibenförmigen Körper auf, an welchem unterseitig ein metallisches Rotorelement starr aufgenommen ist (nicht sichtbar in der Fig. 2a). Das Aufnahmeelement 14 sitzt auf dem Lagerpunkt 19 auf und ist somit drehbar gelagert. Der Durchmesser des Aufnahmeelements 14 sowie auch der Durchmesser des aufgenommenen Rotorelements entspricht im Wesentlichen der Breite des Aufnahmeabschnitts 13a des Trägerkörpers 13 entspricht. Der im Gehäuse eines zugehörigen Drehgebers vorhandene Bauraum kann somit insofern optimal ausgenutzt werden, als dass mit zunehmendem Durchmesser des Rotorelements die Signalstärke und Genauigkeit bei der Detektion seiner Winkellage verbessert wird. Das Aufnahmeelement 14 weist weiterhin eine Verbindungsstruktur zum Aufbau einer Passverzahnung mit dem Rotorträger eines zugehörigen Drehgebers auf.

Die auf der zweiten Flachseite des Aufnahmeabschnitts 13a des Trägerkörpers 13 angeordnete Statoreinheit 12 umfasst die Leiterkarte 15 mit einem unterseitigen (in der Fig. 2b nicht sichtbaren) System von planaren Erreger- und Empfängerspulen. Die Spulen sind derart an der zweiten Flachseite angeordnet, dass sie dem an der umseitigen ersten Flachseite gelagerten Rotorelement zentriert gegenüberliegen. Durch Anlegen einer Wechselspannung an die Erregerspule werden Wirbelströme im metallischen Rotorelement induziert, und eine daraus resultierende anisotrope Variation des magnetischen Erregerfeldes ist mittels der Empfängerspule detektierbar und einer Winkellage des Rotorelements zuordenbar. Das Funktionsprinzip und der prinzipielle Aufbau der Statoreinheit 12 und des Rotorelements sind in der Druckschrift DE 197 38 836 A1 offenbart.

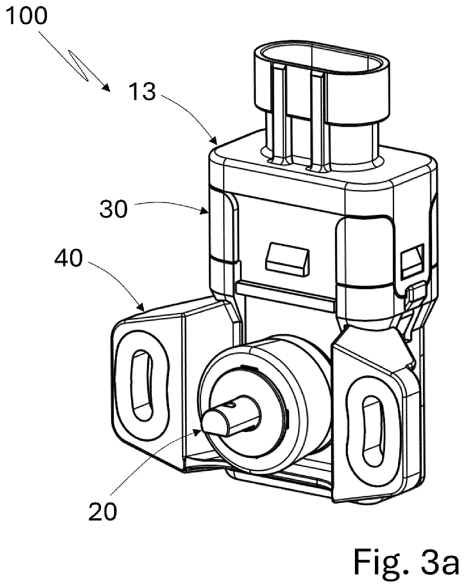

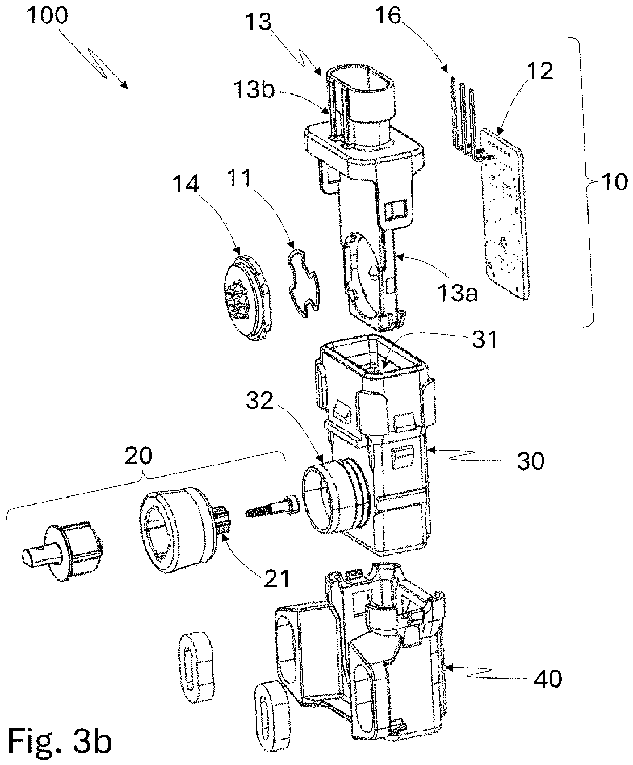

Fig. 3a zeigt eine räumliche Ansicht und Fig. 3b eine Explosionsdarstellung eines erfindungsgemäßen Drehgebers 100 mit der Sensoreinheit 10 entsprechend dem Ausführungsbeispiel gemäß Fig. 2a, b. Weiterhin umfasst der Drehgeber den Rotorträger 20 und das Gehäuse 30.

Der Aufnahmeabschnitt 13a des Trägerkörpers 13 ist mit dem Aufnahmeelement 14, dem Rotorelement 11 und der Statoreinheit 12 in dem Gehäuse 30 aufgenommen. Die montageseitig zum Einführen des Aufnahmeabschnitts 13a vorgesehene Sensoröffnung 31 wird im montierten Zustand durch den Steckerabschnitt 13b verschlossen.

Der Rotorträger 20 weist den Verbindungsabschnitt 21 auf, der durch eine zentrale Öffnung in der Rotorträgeraufnahme 32 in das Gehäuse 30 hineinragt und mit dem Aufnahmeelement 14 mittels einer Passverzahnung drehfest verbunden ist. Der Rotorträger 20 ist somit am Gehäuse 30 drehbar gelagert und über das Aufnahmeelement 14 drehfest mit dem Rotorelement 11 verbunden, derart, dass eine Drehbewegung des Rotorträgers 20 mittels der Statoreinheit 12 detektierbar ist. Der Rotorträger 20 bildet die Schnittstelle für die rotierende Komponente der jeweiligen Anwendung, etwa in einem Kraftfahrzeug, und kann zweckmäßig konfiguriert werden.

Als statorseitige Schnittstelle weist der Drehgeber 100 zudem den Gehäusesitz 40 auf, wobei das Gehäuse 30 mittels einer Schnappverbindung an dem Gehäusesitz 40 aufgenommen ist.

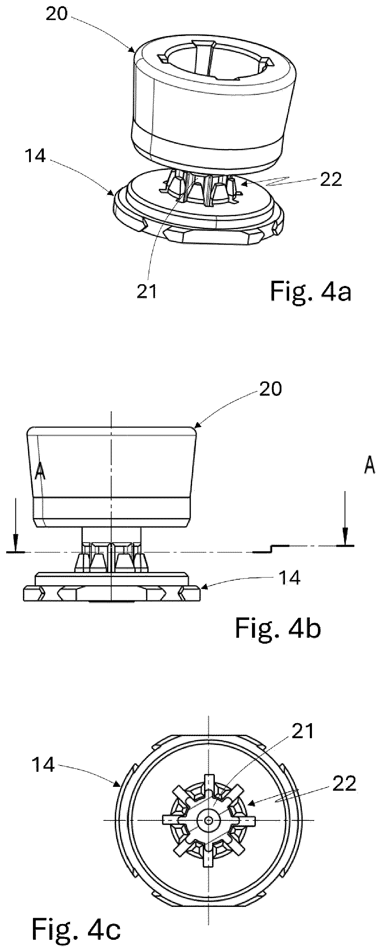

Die drehfeste Verbindung zwischen Rotorträger 20 und Aufnahmeelement 14 ist als Detail in Fig. 4a-c dargestellt, wobei Fig. 4c eine Schnittansicht gemäß der Schnittlinie AA in Fig. 4b zeigt. Die Verbindung ist mittels der Passverzahnung 22 zwischen dem Verbindungsabschnitt 21 des Rotorträgers 20 und der Verbindungsstruktur am Aufnahmeelement 14 aufgebaut. Der Verbindungsabschnitt 21 weist sternförmig angeordnete Federn auf, die in korrespondierende Nuten am Aufnahmeelement 14 eingreifen.

### Bezugszeichenliste

- 100: Drehgeber
- 10: Sensoreinheit
- 11: Rotorelement
- 12: Statoreinheit
- 13: Trägerkörper
- 13a: Aufnahmeabschnitt
- 13b: Steckerabschnitt
- 14: Aufnahmeelement
- 15: Leiterkarte
- 16: Kontaktmittel
- 17: Verbindungsmittel
- 18: Vertiefung
- 19: Lagerpunkt
- 20: Rotorträger
- 21: Verbindungsabschnitt
- 22: Passverzahnung
- 30: Gehäuse
- 31: Sensoröffnung
- 32: Rotorträgeraufnahme
- 40: Gehäusesitz

## Patentansprüche

1. Sensoreinheit (10) für einen Drehgeber (100), wenigstens umfassend ein Rotorelement (11), eine Statoreinheit (12), die zur Bestimmung einer Winkellage des Rotorelements (11) ausgebildet ist, und einen Trägerkörper (13),
**dadurch gekennzeichnet, dass** das Rotorelement (11) an einer ersten Flachseite eines Aufnahmeabschnitts (13a) des Trägerkörpers (13) drehbar gelagert ist, wobei die Statoreinheit (12) auf einer umseitigen zweiten Flachseite des Aufnahmeabschnitts (13a) angeordnet ist.

2. Sensoreinheit (10) nach Anspruch 1, **dadurch gekennzeichnet, dass** ein Durchmesser des Rotorelements (11) im Wesentlichen einer Breite des Aufnahmeabschnitts (13a) des Trägerkörpers (13) entspricht.

3. Sensoreinheit (10) nach Anspruch 1 oder 2, **dadurch gekennzeichnet, dass** das Rotorelement (11) an einem Aufnahmeelement (14) starr aufgenommen ist, wobei das Aufnahmeelement (14) an der ersten Flachseite des Aufnahmeabschnitts (13a) drehbar gelagert ist.

4. Sensoreinheit (10) nach Anspruch 3, **dadurch gekennzeichnet, dass** Aufnahmeelement (14) zum Aufbau einer drehfesten Verbindung mit einem Rotorträger (20) eines Drehgebers (100) ausgebildet ist, insbesondere zum Aufbau einer Passverzahnung (22).

5. Sensoreinheit (10) nach einem der vorgenannten Ansprüche, **dadurch gekennzeichnet, dass** die Statoreinheit (12) eine Leiterkarte (15) aufweist, auf der ein System von planaren Erreger- und Empfängerspulen, ein Hall-Sensor oder ein magnetoresistiver Sensor angeordnet ist.

6. Sensoreinheit (10) nach einem der vorgenannten Ansprüche, **dadurch gekennzeichnet, dass** der Trägerkörper (13) einen endseitigen Steckerabschnitt (13b) aufweist, insbesondere eine Steckerbuchse, wobei elektrische Kontaktmittel (16) zur Kontaktierung der Statoreinheit (12) in dem Steckerabschnitt (13b) angeordnet sind.

7. Sensoreinheit (10) nach einem der vorgenannten Ansprüche, **dadurch gekennzeichnet, dass** der Trägerkörper (13) Verbindungsmittel (17) aufweist, die zum Aufbau einer mechanischen Verbindung mit einem Gehäuse (30) eines Drehgebers (100) ausgebildet sind, insbesondere zum Aufbau einer Schnappverbindung.

8. Sensoreinheit (10) nach einem der vorgenannten Ansprüche, **dadurch gekennzeichnet, dass** der Trägerkörper (13) als ein einteiliges Spritzgussbauteil ausgebildet ist.

9. Drehgeber (100) für ein Kraftfahrzeug, eine Baumaschine, eine Landmaschine oder eine Sondermaschine, wenigstens umfassend eine Sensoreinheit (10) gemäß einem der vorgenannten Ansprüche, einen Rotorträger (20) und ein Gehäuse (30), wobei der Aufnahmeabschnitt (13a) des Trägerkörpers (13) der Sensoreinheit (10) mit dem Rotorelement (11) und der Statoreinheit (12) in dem Gehäuse (30) aufgenommen und der Rotorträger (20) an dem Gehäuse (30) drehbar gelagert ist, wobei ein Verbindungsabschnitt (21) des Rotorträgers (20) in das Gehäuse (30) hineinragt und mit dem Rotorelement (12) wenigstens mittelbar drehfest verbunden ist, derart, dass eine Drehbewegung des Rotorträgers (20) mittels der Statoreinheit (12) detektierbar ist.

10. Drehgeber (100) nach Anspruch 9, **dadurch gekennzeichnet, dass** das Gehäuse (30) eine Sensoröffnung (31) aufweist, durch die der Aufnahmeabschnitt (13a) des Trägerkörpers (13) montageseitig in das Gehäuse (30) einführbar ist, wobei die Sensoröffnung (31) durch den Steckerabschnitt (13b) verschlossen ist.
